# EUROPÄISCHE PATENTSCHRIFT

(11) **EP 0 651 694 B1**
(45) Veröffentlichungstag und Bekanntmachung des Hinweises auf die Patenterteilung: **09.10.1996**
(21) Anmeldenummer: 94913094.2
(22) Anmeldetag: 30.03.1994
(51) Int. Cl.: B29B 13/06, B29B 9/06, C08J 3/12, C08G 63/88

(54) **VERFAHREN ZUR GLEICHZEITIGEN TROCKNUNG UND KRISTALLISATION VON KRISTALLISATIONSFÄHIGEM THERMOPLASTISCHEM KUNSTSTOFF**
PROCESS FOR THE SIMULTANEOUS DRYING AND CRYSTALLISATION OF CRYSTALLISABLE THERMOPLASTIC SYNTHETIC MATERIAL
PROCEDE PERMETTANT LE SECHAGE ET LA CRISTALLISATION SIMULTANES D'UNE MATIERE THERMOPLASTIQUE CRISTALLISABLE

(30) Priorität: 29.04.1993 DE 4314162
(43) Veröffentlichungstag der Anmeldung: 10.05.1995
(73) Patentinhaber: RIETER AUTOMATIK GmbH, D-63762 Grossostheim (DE)
(72) Erfinder: KEILERT, Jürgen, D-63839 Kleinwallstadt (DE)
(74) Vertreter: Bardehle, Heinz, Dipl.-Ing.
(86) Internationale Anmeldenummer: EP9401007
(87) Internationale Veröffentlichungsnummer: WO9425239

(56) Entgegenhaltungen:
- WO-A-90/07408
- DE-A- 2 140 265
- DATABASE WPI Section Ch, Week 8409, Derwent Publications Ltd., London, GB; Class AEB, AN 84-053256 C09! & JP,A,59 012 805 (MITSUBISHI CHEM. IND. K.K.) 23. Januar 1984
- PATENT ABSTRACTS OF JAPAN vol. 8, no. 100 (M-295) 11. Mai 1984 & JP,A,59 012 805 (MITSUBISHI KASEI KOGYO K.K.) 23. Januar 1984

## Beschreibung

Die Erfindung bezieht sich auf ein Verfahren zur gleichzeitigen Trocknung und Kristallisation von kristallisationsfähigem thermoplastischem Kunststoff, z. B. Polyäthylenterephthalat, bei dem aus der Schmelze kommender Kunststoff in Strangform extrudiert, durch Abschreckung in Wasser an der Oberfläche verfestigt und durch Behandlung mit Gas kristallisiert und getrocknet wird, unter Verwendung einer Vorrichtung zum Abkühlen und Trocknen von aus Düsen austretenden Strängen mit einer mit ihrem aufnahmeseitigen Ende unter den Düsen angeordneten Ablaufrinne und einer auf der Ablaufrinne innerhalb einer Abschreckungsstrecke einen Kühlflüssigkeitsstrom erzeugenden Einrichtung, mit einer folgenden Entwässerungsstrecke, in der die Ablaufrinne mit Durchlässen für den freien Durchtritt der Kühlflüssigkeit versehen ist, mit einer anschließenden Trocknungsstrecke, in der die Ablaufrinne mit dicht benachbarten Düsen für den Durchtritt des Gases versehen ist, und mit einem der Trocknungsstrecke folgenden Granulator.

Ein derartiges Verfahren, bei dem schmelzflüssige Polyesterstränge zunächst in Wasser abgeschreckt, danach granuliert und schließlich als Granulat in einem Behälter unter Erhitzung bei einer Temperatur von oberhalb 130 °C für 2 bis 30 min. kristallisiert werden, ist aus der DE-OS 19 05 677 bekannt. Es ist weiterhin aus der DE-OS 21 40 265 eine Weiterentwicklung dieses Verfahrens bekannt, bei dem Kunststoffbänder nach vorheriger Abschreckung in einem Wasserbad durch ein Gehäuse geleitet werden, dessen Innenraum durch eingeblasenes erhitztes Gas beheizt wird. Die Behandlung mit dem erhitzten Gas dauert 2 bis 3 Min. und spielt sich bei einer Gastemperatur von 110 bis 250 °C ab.

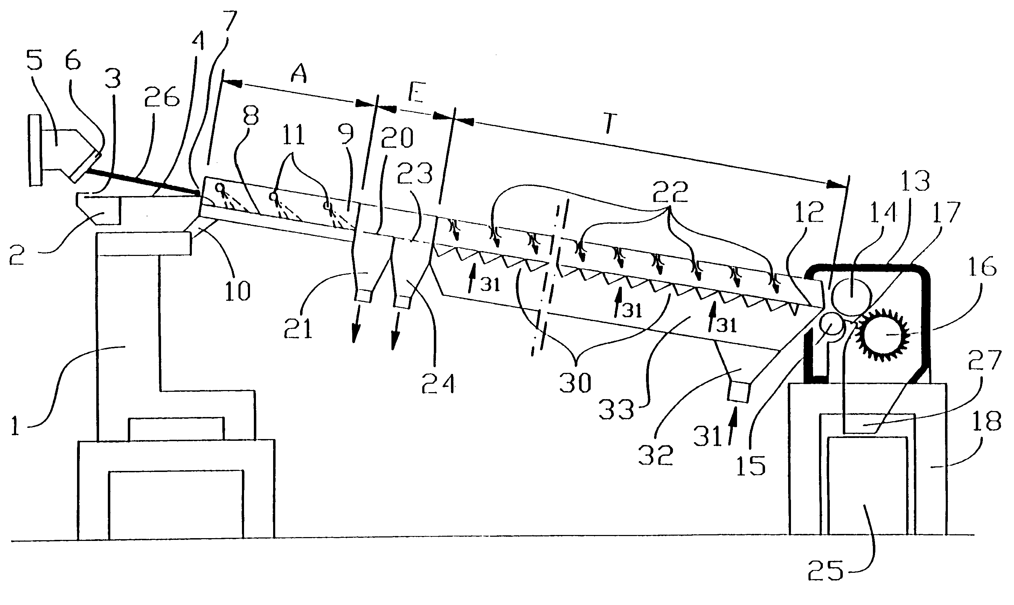

Der Erfindung liegt die Aufgabe zugrunde, den Verfahrensschritt der Trocknung und Kristallisation im Rahmen einer bekannten und in der Praxis bewährten Vorrichtung zum Abkühlen und Trocknen von aus Düsen austretenden Strängen aus kristallisationsfähigem thermoplastischem Kunststoff so zu gestalten, daß sich dabei kurze Bearbeitungszeiten ergeben. Verwendet werden soll dabei eine aus der DE 39 00 250 C2 bekannte Vorrichtung, wie sie insbesondere in Fig. 2 dieser Patentschrift dargestellt ist.

Gelöst wird das Problem erfindungsgemäß dadurch, daß die Längen der Abschreckungsstrecke, der Entwässerungsstrecke und der Trocknungsstrecke unter Berücksichtigung der Fließgeschwindigkeit der Stränge entlang der Ablaufrinne so gewählt werden, daß sich in der Abschreckungsstrecke eine Durchlaufzeit von höchstens etwa 1,5 Sekunden zur Erzielung einer Oberflächentemperatur der Stränge von mindestens 100 °C, in der Entwässerungsstrecke eine Durchlaufzeit von höchstens etwa 0,1 Sekunden und in der Trocknungsstrecke zur Kristallisation eine Durchlaufzeit von höchstens ca. 20 Sekunden bei weitgehender Aufrechterhaltung der Oberflächentemperatur am Ende der Abschreckungsstrecke ergibt.

Zweckmäßige Weiterbildungen des erfindungsgemäßen Verfahrens sind in den abhängigen Ansprüchen beschrieben.

Das mit Hilfe der bekannten Vorrichtung durchgeführte Verfahren, die zu diesem zweck hinsichtlich ihrer Längen entsprechend anzupassen ist, bringt das überraschende Ergebnis, daß die Zeit für die Kristallisation, in der nach dem Abschrecken der Stränge diese bei einer Temperatur von mindestens 100 °C gehalten werden, gegenüber den bekannten Verfahren erheblich abgekürzt werden kann, nämlich auf die Durchlaufzeit in der Trocknungsstrecke, die höchstens ca. 20 Sekunden beträgt. Dieses überraschende Ergebnis stellt sich darum ein, weil in der Trocknungsstrecke aufgrund der Beaufschlagung der Stränge mit dem Luftstrom diese durch entsprechende Temperierung des Luftstroms praktisch über die gesamte Länge der Trocknungsstrecke auf ihrer Oberflächentemperatur, also mindestens 100 °C, gehalten werden können, wobei restliches Oberflächenwasser mangels Vorhandensein den Prozeß der Kristallisation nicht stören kann. Bei den bekannten Vorrichtungen ergibt sich mangels intensiver Entwässerung der Stränge bzw. des Granulats vor dem Bereich, in dem die Kristallisation stattfindet, eine beträchtliche Menge von Oberflächenwasser, das in dem betreffenden Bereich zunächst abdampfen muß, wobei dem Material so viel Wärme entzogen wird, daß hierdurch der Kristallisationsvorgang erheblich verlängert wird. Dieser Wärmeverlust muß dann durch Zuführung von Wärme in dem betreffenden Bereich kompensiert werden. Dies entfällt bei dem erfindungsgemäßen Verfahren, da bei diesem durch die Entwässerungsstrecke dafür gesorgt wird, daß die Stränge praktisch wasserfrei in die Trocknungsstrecke gelangen, wo, falls an den Strängen noch Oberflächenrestwasser vorhanden ist, dieses bereits zu Beginn vollständig entfernt wird, so daß die Trocknungsstrecke praktisch vollständig ohne schädlichen Einfluß von Restwasser ihre Wirkung hinsichtlich der Kristallisation entfalten kann. Außerdem ergibt sich der Vorteil, das erfindungsgemäße Verfahren auf einer in der Praxis bewährten, konstruktiv relativ einfachen Vorrichtung ablaufen zu lassen, was zu einem entsprechend reduzierten apparativen Aufwand führt.

Eine besonders intensive Entwässerung in der Entwässerungsstrecke erhält man dann, wenn die Stränge nach dem Ablauf der Kühlflüssigkeit einem diese trocknenden Luftstrom ausgesetzt werden.

Zweckmäßig werden die Stränge in dem sich die Trocknungsstrecke anschließenden Granulator zu Granulat zerschnitten. Das trocken vorliegende Granulat kann dann weiterhin im wesentlichen auf der Oberflächentemperatur der Stränge im Bereich der Trocknungsstrecke gehalten werden, ohne daß dabei Probleme des Abdampfens von Restwasser entstehen, wodurch der Prozeß der Kristallisation weiter ökonomisch fortgesetzt werden kann.

Ein Ausführungsbeispiel der Erfindung ist anhand der Figur dargestellt.

In der Figur ist eine Vorrichtung dargestellt, die an die Durchführung des erfindungsgemäßen Verfahrens angepaßt ist. Die Vorrichtung enthält das Gestell 1, auf dem der Wasserkasten 2 befestigt ist, dem in bekannter Weise Wasser zugeführt wird, das hier als Kühlflüssigkeit dient. Die Kühlflüssigkeit strömt aus der Schlitzdüse 3 auf den Ablauftisch 4 und über diesen nach rechts hin als ein Wasserfilm, der auf den Ablauftisch 4 auftreffende Stränge 26 eines kristallisierbaren thermoplastischen Kunststoffes mitnimmt. Oberhalb des Ablauftisches 4 ist das Düsenpaket 5 angeordnet, von dem eine Düse 6 dargestellt ist. Dem Düsenpaket 5 wird in bekannter Weise thermoplastischer Kunststoff schmelzflüssig zugeführt und aus der Düse 6 ausgepreßt. Die Gestaltung eines derartigen Düsenpakets ist bekannt. Dementsprechend liegen bei der in der Figur dargestellte Vorrichtung mehrere Düsen 6 auf einer Linie nebeneinander.

Aus den Düsen 6 austretende Stränge 26 fallen zunächst auf den Ablauftisch 4 und werden von dem den Ablauftisch 4 überströmenden Wasserfilm mitgenommen, bis sie über das Ende 7 des Ablauftischs 4 zur Ablaufrinne 8 gelangen, auf der sie in etwa paralleler Anordnung herabgleiten. Die Ablaufrinne 8 wird in dem Gehäuse 9 gehalten, das sich mit seiner linken Seite über den Ausleger 10 auf dem Gestell 1 abstützt. Im Gehäuse 9 sind sechs Kühlwasser- Sprühdüsen 11 angeordnet, die, falls erforderlich, zusätzlich Kühlflüssigkeit, also insbesondere Wasser, auf die Ablaufrinne 8 sprühen und damit den auf die Kunststoffstränge ausgeübte Kühleffekt erhöhen. Die Ablaufrinne 8 leitet mit ihrem unteren Ende 12 die über sie herabgleitenden Kunststoffstränge 26 dem Granulator 13 zu, der die beiden Einzugswalzen 14 und 15 sowie die Messerwalze 16 enthält. Die Messerwalze 16 arbeitet gegen das gleichzeitig als Zuführtisch dienende Gegenmesser 17. Dieser konstruktive Aufbau eines Granulators ist für sich bekannt. Der Granulator 13 ist auf dem Ständer 18 montiert.

Der oben beschriebene Bereich der Ablaufrinne 8, über den die Kühlflüssigkeit fließt, bildet die Abschreckungsstrecke A, an die sich die Entwässerungsstrecke E anschließt. Die Entwässerungsstrecke E enthält den Wasserablauf 21, in den das über die Abschreckungsstrecke A zugeführte Wasser durch den Spalt 20 in der Ablaufrinne 8 direkt abläuft. Die Entwässerungsstrecke E enthält weiterhin den auf den Spalt 20 folgenden Luftabsaugschacht 24, durch den ein Luftstrom gemäß der Richtung des eingezeichneten Pfeils durch die über die Ablaufrinne 8 herabgleitenden Stränge 26 hindurchgesogen wird, wozu die Ablaufrinne 8 in diesem Bereich als Sieb 23 ausgebildet ist. Somit verlassen die Stränge 26 die Entwässerungsstrecke E praktisch vollkommen wasserfrei.

An die Entwässerungsstrecke E schließt sich die Trocknungsstrecke T an. Die Ablaufrinne 8 ist in diesem Bereich bis zu ihrem unteren Ende 12 mit dicht benachbarten Eintrittsdüsen 30 für einen Gasstrom, insbesondere Luftstrom, versehen, der hier durch den Pfeil 31 angedeutet ist. Der Gasstrom wird durch den Schacht 32 in den Kasten 33 geführt, der sich unterhalb des Bereichs der Trocknungsstrecke an der Ablaufrinne mit den Eintrittsdüsen 30 befindet. Der Gasstrom umspült die im Bereich der Trocknungsstrecke geführten Kunststoffstränge 26 und hebt diese vom Boden der Ablaufrinne derart ab, daß die Kunststoffstränge 26 weitgehend reibungsfrei geführt werden. Hierfür sind die Eintrittsdüsen 30 in entsprechender Dichte vorgesehen.

Die Eintrittsdüsen 30 werden durch schräg aufwärtsverlaufende Schlilz- bzw. Lochdüsen gebildet, die durch die Sägezahn-Darstellung in der Figur angedeutet werden. Derartige Schlitzdüsen sind bekannt. Es sei jedoch darauf hingewiesen, daß auch senkrecht durch den Boden der Ablaufrinne hindurchtretende Eintrittsdüsen verwendet werden können, die dann allerdings nicht dem von ihnen geleiteten Luftstrom die Tendenz geben, fördernd auf die herabgeführten Kunststoffstränge 26 zu wirken. Eine solche zusätzliche Förderwirkung kann man durch die Anordnung von oberhalb der Eintrittsdüsen 30 angeordneten Vorschubdüsen 22 erzielen, die einen Gasstrom, also insbesondere einen Luftstrom, schräg abwärts auf die herabgeführten Kunststoffstränge 26 richten.

Die Trocknungsstrecke T erhält aufgrund der Anordnung der vorhergehenden Entwässerungsstrecke E oberflächlich gekühlte Kunststoffstränge 26, die praktisch vollständig von Kühlwasser befreit sind. Durch den von den Eintrittsdüsen 30 geleiteten Luftstrom werden evtl. an den Kunststoffsträngen 26 noch haftende geringe Mengen von Restwasser unmittelbar zu Beginn der Trocknungsstrecke T abgetrocknet, so daß praktisch über die gesamte Länge der Trocknungsstrecke trockene Kunststoffstränge durch diese geführt werden, so daß in der Trocknungsstrecke durch entsprechende Einstellung der Temperatur des durch den Schacht 32 zugeführten Luftstromes die Oberflächentemperatur der Stränge über die gesamte Länge der Trocknungsstrecke konstant gehalten werden kann, und zwar auf einem Temperaturniveau, das für die in diesem Bereich stattfindende Kristallisation erforderlich ist. Zu diesem Zweck sind in den Schacht 32 gegebenenfalls entsprechende Heizer oder Kühler je nach der für das betreffende Kunststoffmaterial notwendigen Temperatur vorzusehen. Die Kristallisation der Kunststoffstränge 26 kann also in einem Bereich und während einer Zeit stattfinden, wo die Kunststoffstränge 26 frei von Oberflächenwasser sind, so daß der Kristallisationsvorgang durch irgendwelche Verdampfungsprozesse von Restwasser an der Oberfläche der Kunststoffstränge nicht beeinträchtigt insbesondere verzögert werden kann.

Es sei noch darauf hingewiesen, daß die Entwässerungsstrecke E auch aus einem Wasserablauf 21 allein bestehen kann, wenn in diesem so viel Wasser abgeführt werden kann, daß an den Strängen 26 haftende Restwasser zu Beginn der Trocknungsstrecke T vollständig entfernt werden kann, so daß für die Trocknungsstrecke T noch ein ausreichend langer Bereich verbleibt, in dem trockene Stränge 26 geführt werden, wo dann in ausreichender Weise die Kristallisation stattfindet.

Das von dem Granulator 13 erzeugte Granulat wird durch den Ausfallschacht 27 in den Behälter 25 geleitet in dem das Granulat gegebenenfalls durch Einblasen erhitzter Luft auf einer Temperatur gehalten werden kann, die der Oberflächentemperatur der Stränge im Bereich der Trocknungsstrecke T entspricht, so daß sich in dem Granulat der Kristallisierungsprozess fortsetzen kann. Es werden auf diese Weise Kunststoffstränge bzw. Granulat erzeugt, worin das Kunststoffmaterial ausreichend kristallisiert ist, was für die weitere Verarbeitung des Granulats darum von Bedeutung ist, weil das Granulat in kristallinem Zustand wesentlich besser rieselfähig ist als Granulat in amorphen Zustand. In amorphen Zustand neigt das Granulat nämlich zu Agglomeratbildung. Wie sich gezeigt hat, reicht es zur Vermeidung dieses Effektes, das Kunststoffmaterial so zu behandeln, daß es wenigstens teilweise kristallisiert ist, im Falle von Polyäthylenterephthalat (PETP) zu 20%. Hierfür sind in der folgenden Tabelle die Daten einer entsprechenden Ausführungsform angegeben.

**Tabelle**

| Behandlung von PET | | | | |
|---|---|---|---|---|
| Raumklima (°C) | 21 | 21 | 23 | 23 |
| **Düsenpaket 5** | | | | |
| Massedurchsatz (kg/h pro Strang) | 30 | 50 | 80 | 100 |
| Schmelzetemperatur (°C) | 286 | 287 | 285 | 285 |
| **Abschreckungsstrecke A (m)** | 0,7 | 0,7 | 1,3 | 1,3 |
| Wasserdurchsatz (m³/h) | 1,6 | 1,6 | 1,6 | 2.0 |
| Wassertemperatur (°C) | 26 | 26 | 25 | 24 |
| **Entwässerungsstrecke E (m)** | 0,3 | 0,3 | 0,3 | 0,3 |
| Absaugung (mbar) | 0 | 0 | -2 | -6 |
| **Trocknungsstrecke T (m)** | 6 | 6 | 6 | 6 |
| Luftstromtemperatur (°C) | 31 | 32 | 26 | 32 |

| **Granulator 13** | | | | |
|---|---|---|---|---|
| Stranggeschwindigkeit (m/min) | 40 | 50 | 100 | 120 |

| Granulate: | | | | |
|---|---|---|---|---|
| Granulatgewicht (mg) | 42,0 | 50,0 | 40,5 | 39,9 |
| Strangtemperatur (°C) | 118 | 144 | 143 | 154 |
| **Kristallisationsgrad (%)** | 20,2 | 19,4 | 20,2 | 19,4 |

## Patentansprüche

1. Verfahren zur gleichzeitigen Trocknung und Kristallistion von kristallisationsfähigem thermoplastischem Kunststoff, z. B. Polyäthylenterephthalat, bei dem aus der Schmelze kommender Kunststoff in Strangform extrudiert, durch Abschreckung in Wasser an der Oberfläche verfestigt und durch Behandlung mit Gas kristallisiert und getrocknet wird, unter Verwendung einer Vorrichtung zum Abkühlen und Trocknen von aus Düsen (6) austretenden Strängen (26) mit einer mit ihrem aufnahmeseitigen Ende unter den Düsen (6) angeordneten Ablaufrinne (8) und einer auf der Ablaufrinne (8) innerhalb einer Abschreckungsstrecke (A) einen Kühlflüssigkeitsstrom erzeugenden Einrichtung, mit einer folgenden Entwässerungsstrecke (E), in der die Ablaufrinne (8) mit Durchlässen (20) für den freien Durchtritt der Kühlflüssigkeit versehen ist, mit einer anschließenden Trocknungsstrecke (T), in der die Ablaufrinne (8) mit dicht benachbarten Düsen (30) für den Durchtritt von Gas versehen ist, und mit einem der Trocknungsstrecke (T) folgenden Granulator (13), **dadurch gekennzeichnet,** daß die Längen der Abschreckungsstrecke (A), der Entwässerungsstrecke (E) und der Trocknungsstrecke (T) unter Berücksichtigung der Fließgeschwindigkeit der Stränge (26) entlang der Ablaufrinne (8) so gewählt werden, daß sich in der Abschreckungsstrecke (A) eine Durchlaufzeit von höchstens etwa 1,5 Sekunden zur Erzielung einer Oberflächentemperatur der Stränge (26) von mindestens 100 °C, in der Entwässerungsstrecke (E) eine Durchlaufzeit von höchstens etwa 0,1 Sekunden und in der Trocknungsstrecke (T) zur Kristallisation eine Durchlaufzeit von höchstens ca. 20 Sekunden bei weitgehender Aufrechterhaltung der Oberflächentemperatur am Ende der Abschreckungsstrecke (A) ergibt.

2. Verfahren nach Anspruch 1, dadurch gekennzeichnet, daß in der Entwässerungsstrecke (E) die Stränge (26) nach dem Ablauf der Kühlflüssigkeit einem diese trocknenden Luftstrom ausgesetzt werden.

3. Verfahren nach Anspruch 1 oder 2, dadurch gekennzeichnet, daß die Stränge (26) in dem sich an die Trocknungsstrecke (T) anschließenden Granulator (13) die Stränge (26) zu Granulat zerschnitten werden.

4. Verfahren nach Anspruch 3, dadurch gekennzeichnet, daß die Oberflächentemperatur des Granulats im wesentlichen auf der Oberflächentemperatur der Stränge (26) im Bereich der Trocknungsstrecke (T) gehalten wird.

## Claims

1. Process for the simultaneous drying and crystallization of crystallizable thermoplastic synthetic (plastics) material, for example polyethylene terephthalate, in which plastic from the melt is extruded in strands, solidified at the surface by quenching in water, and crystallized and dried by treatment with gas, using a device for cooling and drying the strands (26) that emerge from nozzles (6), the said device comprising a run-out launder (8) with its inlet end positioned beneath the nozzles (6) and a device over the run-out launder (8) that produces a flow of coolant within a quenching section (A), a subsequent dewatering section (E) in which the run-out launder (8) has apertures (20) to allow free drainage of the coolant, a subsequent drying section (T) in which the run-out launder (8) has closely spaced nozzles (30) for the passage of gas, and a granulator (13) downstream from the drying section (T), **characterized in that** having regard to the speed with which the strands (26) flow along the run-out launder (8), the lengths of the quenching section (A), the dewatering section (E) and the drying section (T) are chosen such that the passage time through the quenching section (A) is at most approximately 1.5 seconds to attain a surface temperature of the strands (26) of at least 100°C, the passage time through the dewatering section (E) is at most approximately 0.1 second, and the passage time through the drying section (T) is at most approximately 20 seconds to allow crystallization, with the surface temperature at the end of the quenching section (A) largely maintained.

2. Process according to Claim 1, characterized in that in the dewatering section (E), once the coolant has drained away the strands (26) are exposed to an air-stream which dries them.

3. Process according to Claims 1 or 2, characterized in that in the granulator (13) downstream from the drying section (T), the strands (26) are cut up into a granulate.

4. Process according to Claim 3, characterized in that the surface temperature of the granulate is maintained essentially the same as the surface temperature of the strands (26) in the area of the drying section (T).

## Revendications

1. Procédé pour le séchage et la cristallisation simultanés d'une matière thermoplastique cristallisable, par exemple du polyéthylène-téréphtalate, selon lequel on extrude sous forme de fil la matière provenant de la coulée, on la durcit à sa surface par trempe avec de l'eau et on la cristallise et sèche par un traitement avec du gaz, en utilisant un dispositif, destiné à refroidir et sécher des fils (26) sortant de filières (6), avec un chenal de coulée (8), dont l'extrémité réceptrice se trouve sous les filières (6), et un dispositif produisant un courant de liquide de refroidissement sur le chenal de coulée (8) dans les limites d'une section de trempe (A), avec ensuite une section d'assèchement (E) dans laquelle le chenal de coulée (8) est muni de passages (20) qui laissent passer librement le liquide de refroidissement, avec ensuite une section de séchage (T) dans laquelle le chenal de coulée (8) est muni de filières (30) très proches les unes des autres et destinées au passage d'un gaz, et avec un granulateur (13) qui suit la section de séchage (T), **caractérisé en ce que** les longueurs de la section de trempe (A), de la section d'assèchement (E) et de la section de séchage (T) sont choisies en tenant compte de la vitesse d'écoulement des fils (26) le long du chenal de coulée (8) de telle sorte que le temps de passage dans la section de trempe (A) est au maximum de 1,5 secondes environ pour obtenir une température en surface des fils (26) au moins égale à 100 °C, que le temps de passage dans la section d'assèchement (E) est au maximum de 0,1 seconde environ et que le temps de passage dans la section de séchage (T) pour la cristallisation est au maximum de 20 secondes environ si l'on a bien conservé la température en surface à l'extrémité de la section de trempe (A).

2. Procédé selon la revendication 1, caractérisé en ce que, dans la section d'assèchement (E), on soumet les fils (26), après l'évacuation du liquide de refroidissement, à un courant d'air séchant ces fils.

3. Procédé selon la revendication 1 ou 2, caractérisé en ce que, dans le granulateur (13) qui suit la section de séchage (T), on débite les fils (26) en granulat.

4. Procédé selon la revendication 3, caractérisé en ce que l'on maintient la température en surface du granulat globalement à la température en surface des fils (26) dans la zone de la section de séchage (T).
